# EUROPEAN PATENT SPECIFICATION

(11) **EP 1 434 362 B1**
(45) Date of publication and mention of the grant of the patent: **09.09.2009**
(21) Application number: 03029648.7
(22) Date of filing: 22.12.2003
(51) Int. Cl.: H04B 1/713, H04B 1/30, H03D 7/16, H04B 1/04

(54) **Frequency hopping system and method thereof**
Frequenzsprungsystem und entsprechendes Verfahren
Système de saut de fréquence et méthode correspondante

(30) Priority: 23.12.2002 KR 2002082857
(43) Date of publication of application: 30.06.2004
(73) Proprietor: Electronics and Telecommunications Research Institute, Daejeon-city 305-350 (KR)
(72) Inventor: Ryu, Joon-Gyu, Daejeon-city (KR); Jeong, Hoon, Seo-gu, Daejeon-city (KR); Lee, Ho-Jin, Yuseong-gu, Daejeon-city (KR); Oh, Deock-Gil, Seo-gu, Daejeon-city (KR)
(74) Representative: Betten & Resch

(56) References cited:
- EP-A- 0 752 761
- EP-A- 0 893 887

## Description

### BACKGROUND OF THE INVENTION

### (a) Field of the Invention

The present invention relates to a frequency hopping system and method. More specifically, the present invention relates to a frequency hopping system and method for broadband multimedia communication.

### (b) Description of the Related Art

A satellite-based multimedia communication system provides broadband services. In particular, the European DVB-RCS (digital video broadcasting and return channel via satellite) standard for bidirectional satellite communication uses the MF-TDMA (multi-frequency time division multiple access) and the QPSK (quadrature phase shift keying) method for modulation, supports return links of 4Mbps at a maximum, requires a hopping range of up to 20MHz, and also requires fast frequency hopping of about a few hundred µseconds between time slots.

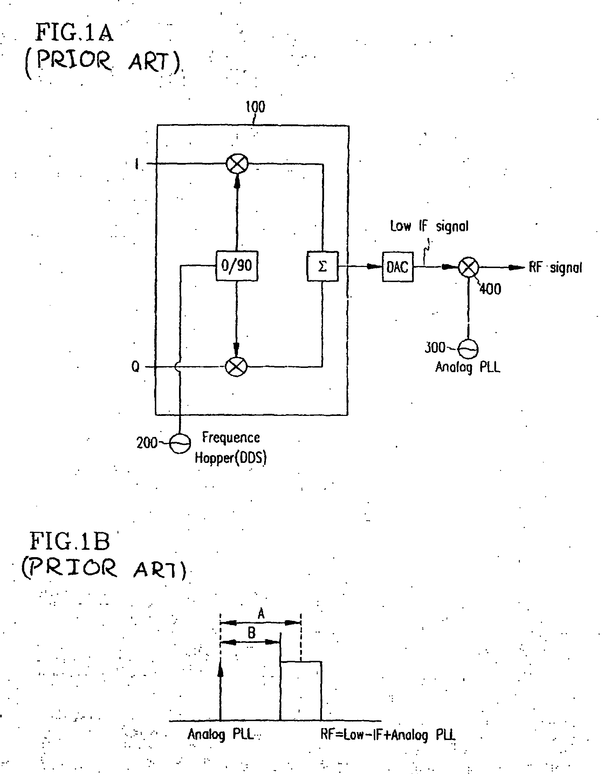

FIG. 1(a) shows a general prior art frequency hopping system.

As shown, the frequency hopping system comprises a QPSK modulator 100, a frequency hopper 200 including a DDS (direct digital synthesizer), a DAC (digital to analog converter), a mixer 400, and an analog PLL (phase-locked loop) unit 300.

The QPSK modulator 100 phase-shifts the signal input from the DDS 200, mixes the phase-shifted signal with respective digital I and Q signals, adds the two signals, and outputs results. The DDS 200 is a frequency synthesizer using a direct frequency synthesizing method, and it solves the slow frequency hopping problem of the conventional PLL unit 300 and its fine frequency tuning difficulty, and accordingly, the DDS 200 is available for fast hopping and fine frequency tuning.

The DAC converts the digital signals output by the QPSK modulator 100 into analog signals, and outputs them.

The mixer 400 mixes the signal output by the DAC and a local oscillator signal output by the PLL unit 300 to generate RF (radio frequency) signals.

The conventional frequency hopping system has realized modulation and frequency hopping functions at a digital unit, which is before the DAC. That is, the frequency hopping system performs in-phase and quadrature-phase modulation on the digital signals, and mixes them with the signals output by the DDS 200 to generate low IF (intermediate frequency) signals.

However, it is difficult to generate high frequency signals at the digital unit of FIG. 1, and the RF signals are generated by mixing the analog PLL signals with the generated low IF signals and performing frequency up-conversion on them at the mixer 400.

The above-output RF signals have frequency up-converted signals of the IF signals and the analog PLL signals together. Since the intervals between the analog PLL signals and the RF signals are very adjacent, spurious characteristics of output signals are worsened when obtaining desired frequency signals by using a filter, and hence, it is difficult to eliminate the analog PLL signals.

That is, as shown in FIG. 1(b), the distance A between the center of the RF signal which is a modulation signal having a predetermined bandwidth and that of the analog PLL signal is comparatively far, but the distance B between the edge of the RF signal and the analog PLL signal is near. Therefore, it is needed to use an excellent filter so as to eliminate the analog PLL signals, and hence, the cost of a terminal increases and the size of the filter becomes larger to enlarge the size of the terminal. Also, it is unsuitable for the conventional frequency hopping system to transmit broadband multimedia signals since the broadband signals have a closer distance between the RF signals and the analog PLL signals.

EP0752761A2 relates to a transceiver circuit comprising a first local oscillator and a variable frequency second local oscillator. The output signals of the first local oscillator and the second local oscillator are mixed in a local frequency converter. The output signal of the local frequency converter is furnished to the transmitter circuit after passing through a filter.

EP0893887A2 relates to a dual band radio communication apparatus which allows communication by selectively using one of communication bands respectively used for two system.

### SUMMARY OF THE INVENTION

It is an advantage of the present invention to provide a frequency hopping system and method for making the size of the terminal smaller and allowing faster frequency hopping when transmitting broadband multimedia signals.

In one aspect of the present invention, a frequency hopping system for converting frequencies of signals into RF signals, comprises: a frequency hopper for outputting signals with temporarily varied frequencies according to a predetermined pattern; a fixed PLL (phase locked loop) unit for outputting frequency-fixed signals; a mixer for mixing the output signals of the frequency hopper(DDS) and the fixed PLL unit, and outputting frequency-hopped local signals; and a modulator for receiving analog-converted I and Q (in-phase and quadrature-phase) signals from a baseband device, synthesizing the analog-converted I and Q signals with the frequency-hopped local signals, combining the two synthesized signals, and outputting RF signals.

The system further comprises first and second DACs (digital to analog converters) for converting the I and Q signals output by the baseband device into analog signals, and outputting them to the modulator.

The frequency hopper converts the frequency and outputs results by using the DDS (direct digital synthesis) method.

In another aspect of the present invention, a frequency hopping method for converting frequencies of signals into RF signals, comprises: (a) mixing signals with temporarily varied frequencies and frequency-fixed signals according to a predetermined pattern, and generating frequency-hopped local signals; and (b) synthesizing analog-converted I and Q signals output from a baseband device with the frequency-hopped local signals, combining the two synthesized signals, and outputting RF signals.

The step (b) comprises converting the I and Q signals output by the baseband device into analog signals.

### BRIEF DESCRIPTION OF THE DRAWINGS

The accompanying drawings, which are incorporated in and constitute a part of the specification, illustrate an embodiment of the invention, and, together with the description, serve to explain the principles of the invention:
FIGs. 1(a) and 1(b) show a conventional frequency hopping system and output signals; and
FIGs. 2(a) and 2(b) show a frequency hopping system and output signals according to a preferred embodiment of the present invention.

### DETAILED DESCRIPTION OF THE PREFERRED EMBODIMENTS

In the following detailed description, only the preferred embodiment of the invention has been shown and described, simply by way of illustration of the best mode contemplated by the inventor(s) of carrying out the invention. As will be realized, the invention is capable of modification in various obvious respects, all without departing from the invention. Accordingly, the drawings and description are to be regarded as illustrative in nature, and not restrictive.

To reduce the size of terminals, recent radio communication systems use the direct conversion method of generating RF signals from in-phase and quadrature-phase signals I and Q which are digitally encoded from the RF signals without converting them to IF signals. In the preferred embodiment of the present invention, the direct conversion method is used to mix signals of the frequency hopper 200 and those of the analog PLL unit 300 and realize fast broadband frequency hopping.

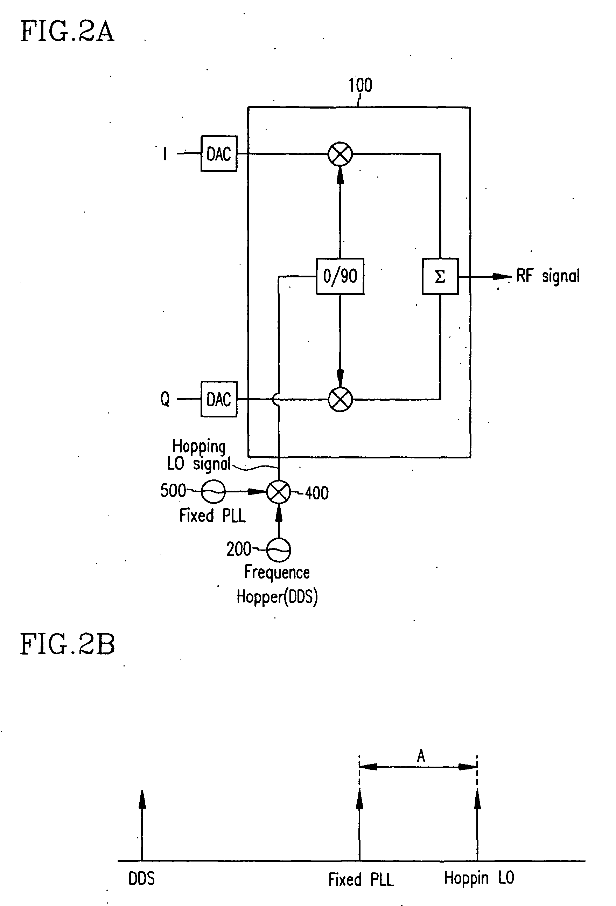

FIG. 2(a) shows a frequency hopping system according to a preferred embodiment of the present invention.

As shown, the frequency hopping system comprises a QPSK modulator 100, a frequency hopper 200 including a DDS, a mixer 400, and a fixed PLL unit 500 for outputting frequency-fixed signals. I and Q signal input terminals of the QPSK modulator 100 are respectively coupled to a DAC.

An operation of the frequency hopping system will now be described.

I and Q signals input to the QPSK modulator 100 are converted into analog signals by the DACs. Output signals of the frequency hopper 200 are mixed with output signals of the fixed PLL unit 500 at the mixer 400, and mixed signals are input to the QPSK modulator 100.

The QPSK modulator 100 phase-modulates the mixed signals, mixes them with the respective analog-converted I and Q signals, performs summation on them, and generates RF signals.

That is, when frequency-converting the digital I and Q signals into RF signals through the direct conversion method without converting them into IF signals, the frequency hopping system mixes signals of the fixed PLL unit 500 and the frequency hopper 200 to generate hopping LO (local oscillator) signals which are frequency-converted output signals. When receiving the hopping LO signals, the QPSK modulator 100 outputs RF signals which have excellent spurious characteristics.

FIG. 2(b) shows a process for generating hopping LO signals.

As shown, since the output signals of the frequency hopper 200 and those of the fixed PLL unit 500 are not modulated, the interval between the hopping LO signals generated by the two signals' frequency conversion and the fixed PLL signals is wide. Therefore, the fixed PLL signals are easily eliminated in the case of using a small filter with ordinary characteristics.

While this invention has been described in connection with what is presently considered to be the most practical and preferred embodiment, it is to be understood that the invention is not limited to the disclosed embodiments, but, on the contrary, is intended to cover various modifications and equivalent arrangements included within the scope of the appended claims.

As described, since the output signals of the frequency hopper and the signals of the fixed PLL unit are frequency-converted, and frequency-hopped at the analog end, fast frequency hopping is possible in the broad bands. Also, since the RF signals are directly extracted from the digitally encoded in-phase and quadrature-phase I and Q signals by using the direct conversion method without converting them to IF signals, the size and cost of the terminal are reduced.

## Claims

1. A frequency hopping system for converting frequencies of signals into radio frequency signals, hereafter RF signals, comprising:
a frequency hopper (200) for outputting signals with temporarily varied frequencies according to a predetermined pattern;
a fixed phase locked loop unit (500), hereafter fixed PLL
unit for outputting frequency-fixed signals;
a mixer (400) for mixing the output signals of the frequency hopper (200) and the fixed PLL unit (500), and outputting frequency-hopped local signals; and **characterized in** further comprising
a modulator (100) for receiving analog-converted in-phase and quadrature-phase signals, hereafter analog-converted I and Q signals, from a baseband device, synthesizing the analog converted I and Q signals with the frequency-hopped local signals, combining the two synthesized signals, and outputting RF signals.

2. The system of claim 1, further comprising: first and second digital to analog converters, hereafter DACs, for converting in-phase and quadrature-phase signals output by the baseband device into analog signals, and outputting them to the modulator (100).

3. The system of claim 1 or 2, wherein the frequency hopper (200) converts the frequency and outputs results by using the direct digital synthesis method, hereafter DDS method.

4. A frequency hopping method for converting frequencies of signals into RF signals, comprising:
(a) mixing signals with temporarily varied frequencies and frequency-fixed signals according to a predetermined pattern, and generating frequency-hopped local signals; and **characterized in** further comprising
(b) synthesizing analog-converted I and Q signals output from a baseband device with the frequency-hopped local signals, combining the two synthesized signals, and outputting RF signals.

5. The method of claim 4, wherein (b) comprises converting in-phase and quadrature-phase signals output by the baseband device into analog signals.

## Patentansprüche

1. Ein Frequenzsprungsystem zum Konvertieren von Frequenzen von Signalen in Radiofrequenzsignale, nachfolgend RF-Signale, aufweisend:
einen Frequenzspringer (200) zum Ausgeben von Signalen mit temporär variierten Frequenzen gemäß einem vorbestimmten Muster;
eine fixierte Phasenregelkreis-Einheit (500), nachfolgend fixierte PLL-Einheit, zum Ausgeben frequenzfixierter Signale;
einen Mixer (400) zum Mixen der Ausgangssignale des Frequenzspringers (200) und der fixierten PLL-Einheit (500) und Ausgeben frequenzgesprungener lokaler Signale, und **gekennzeichnet dadurch, dass** es ferner aufweist:
einen Modulator (100) zum Empfangen von analog-konvertierten In-Phase- und Quadratur-Phase-Signalen, nachfolgend analog-konvertierte I- und Q-Signale, von einer Basisband-Vorrichtung, zum Synthetisieren der analog-konvertierten I- und Q-Signale mit den frequenzgesprungenen lokalen Signalen, und zum Kombinieren der zwei synthetisierten Signale und Ausgeben von RF-Signalen.

2. System nach Anspruch 1, ferner aufweisend:
erste und zweite Digital-zu-analog-Wandler, nachfolgend DACs, zum Konvertieren von In-Phase- und Quadratur-Phase-Signalen, die durch die Basisband-Vorrichtung ausgegeben werden, in analoge Signale und zum Ausgeben von Ihnen an den Modulator (100).

3. System nach Anspruch 1 oder 2, wobei der Frequenzspringer (200) die Frequenz konvertiert und Ergebnisse ausgibt unter Verwendung des direkten digitalen Synthetisierverfahrens, nachfolgend DDS-Verfahren.

4. Ein Frequenzsprungvertahren zum Konvertieren von Frequenzen von Signalen in RF-Signale, aufweisend:
(a) Mixen von Signalen mit temporär variierten Frequenzen und frequenzfixierten Signalen gemäß einem vorbestimmten Muster, und Erzeugen von frequenzgesprungenen lokalen Signalen; und **gekennzeichnet dadurch, dass** es ferner aufweist:
(b) Synthetisieren von analog-konvertierten I- und Q-Signalen, die von einer Basisband-Vorrichtung ausgegeben werden, mit den frequenzgesprungenen lokalen Signalen, Kombinieren der zwei synthetisierten Signale und Ausgeben von RF-Signalen.

5. Verfahren nach Anspruch 4, wobei (b) umfaßt: Konvertieren von In-Phase- und Quadratur-Phase-Signalen, die durch die Basisband-Vorrichtung ausgegeben werden, in analoge Signale.

## Revendications

1. Système de saut de fréquence pour convertir des fréquences de signaux en des signaux radiofréquences, ci-après signaux RF, comprenant :
un dispositif de saut de fréquence (200) pour délivrer des signaux avec des fréquences temporairement modifiées selon un motif prédéterminé ;
une unité de boucle à verrouillage de phase fixe (500), ci-après unité PLL fixe, pour délivrer des signaux de fréquences fixes ;
un mélangeur (400) pour mélanger les signaux de sortie du dispositif de saut de fréquence (200) et de l'unité PLL fixe (500), et délivrer des signaux locaux à saut de fréquence ; et **caractérisé en ce qu'**il comprend en outre :
un modulateur (100) pour recevoir des signaux en phase et en quadrature de phase convertis en analogique, ci-après signaux I et Q convertis en analogique, d'un dispositif de bande de base, synthétiser les signaux I et Q convertis en analogique avec les signaux locaux à saut de fréquence, combiner les deux signaux synthétisés, et délivrer des signaux RF.

2. Système selon la revendication 1, comprenant en outre : des premier et deuxième convertisseurs numérique-analogique, ci-après DAC, pour convertir les signaux en phase et en quadrature de phase délivrés par le dispositif de bande de base en des signaux analogiques, et les délivrer au modulateur (100).

3. Système selon la revendication 1 ou 2, dans lequel le dispositif de saut de fréquence (200) convertit la fréquence et délivre des résultats en utilisant le procédé de synthèse numérique direct, ci-après procédé DDS.

4. Procédé de saut de fréquence pour convertir des fréquences de signaux en des signaux RF, consistant à :
(a) mélanger des signaux avec des fréquences temporairement modifiées et des signaux de fréquences fixes selon un motif prédéterminé, et générer des signaux locaux à saut de fréquence ; et **caractérisé en ce qu'**il consiste en outre à :
(b) synthétiser des signaux I et Q convertis en analogique délivrés par un dispositif de bande de base avec les signaux locaux à saut de fréquence, combiner les deux signaux synthétisés, et délivrer les signaux RF.

5. Procédé selon la revendication 4, dans lequel l'étape (b) comprend la conversion des signaux en phase et en quadrature de phase délivrés par le dispositif de bande de base en des signaux analogiques.
